# FASCICULE DE BREVET EUROPEEN

(11) **EP 1 570 356 B1**
(45) Date de publication et mention de la délivrance du brevet: **03.09.2008**
(21) Numéro de dépôt: 02796856.9
(22) Date de dépôt: 21.11.2002
(51) Int. Cl.: G06F 11/36, G06F 11/28

(54) **DISPOSITIF DE SURVEILLANCE A MEMOIRE TAMPON OPTIMISEE**
ÜBERWACHUNGSVORRICHTUNG MIT EINEM OPTIMIERTEN PUFFERSPEICHER
MONITORING DEVICE WITH OPTIMIZED BUFFER

(43) Date de publication de la demande: 07.09.2005
(73) Titulaire: STMicroelectronics S.A., 92120 Montrouge (FR)
(72) Inventeur: ROBERT, Xavier, F-38450 Saint Georges de Commiers (FR)
(74) Mandataire: de Beaumont, Michel
(86) Numéro de dépôt international: PCT/FR2002/003996
(87) Numéro de publication internationale: WO 2004/049163

(56) Documents cités:
- EP-A- 1 184 790
- US-A- 5 848 264

## Description

La présente invention concerne le test de microprocesseurs. Elle concerne plus particulièrement un dispositif et un procédé pour, dans un circuit de surveillance intégré dans une puce de microprocesseur, stocker des messages numériques permettant de suivre le fonctionnement du microprocesseur avant de transmettre les messages à un outil d'analyse externe.

D1 EP-A-1184790 décrit un système intégré à une puce de microprocesseur prévu pour stocker dans une mémoire des messages relatifs à l'ordre et au types d'instructions éxécutées par le microprocesseur, ces messages étant destinés à un outil d'analyse externe.

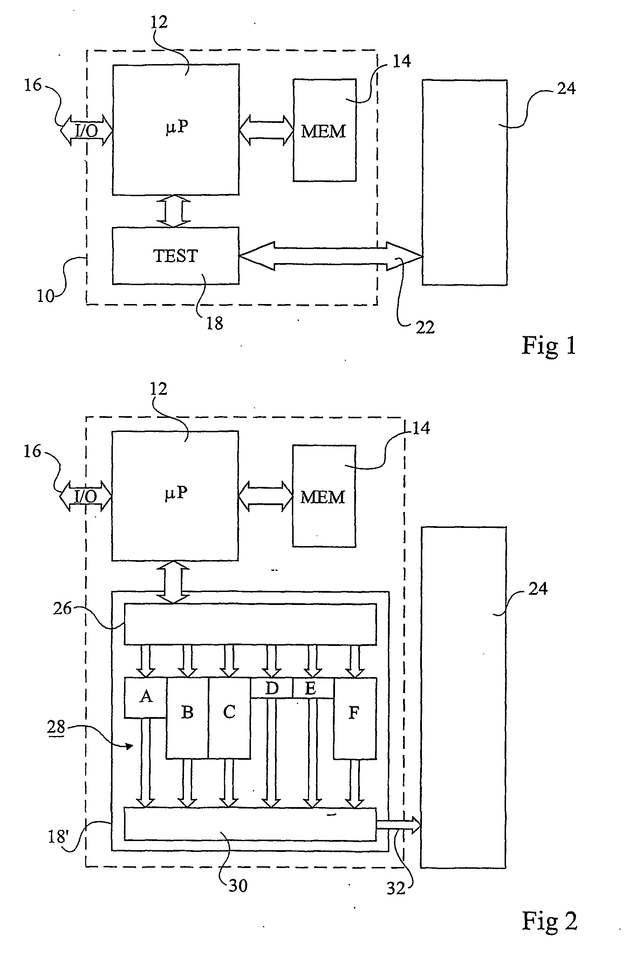

La figure 1 représente de façon schématique un circuit intégré 10 comportant un microprocesseur (µP)12, une mémoire interne (MEM) 14 et des bornes d'entrée/sortie (I/O) 16. Le microprocesseur 12 est destiné à exécuter un programme ou logiciel stocké dans la mémoire 14. Sous la commande du programme, le microprocesseur 12 peut traiter des données fournies par les bornes d'entrée/sortie 16 ou stockées dans la mémoire 14 et lire ou écrire des données par les bornes d'entrée/sortie 16.

De façon à vérifier le bon fonctionnement du microprocesseur, on intègre généralement au circuit intégré 10 un circuit de surveillance 18 (TEST). Le circuit de surveillance 18 est adapté à lire des données spécifiques fournies par le microprocesseur 12 lors du déroulement d'un programme, et à réaliser éventuellement un traitement sur les données lues. Des bornes de test 22 relient le circuit de surveillance 18 à un outil d'analyse 24. L'outil d'analyse 24 peut effectuer un traitement des signaux reçus, par exemple en fonction de commandes fournies par un utilisateur, et assurer une analyse détaillée du fonctionnement du microprocesseur 12. En particulier, l'outil d'analyse 24 peut déterminer la séquence d'instructions du programme réellement exécutée par le microprocesseur 12.

Le nombre de bornes de test 22 peut être du même ordre de grandeur que le nombre de bornes d'entrée/sortie 16, par exemple 200 à 400 bornes. Les bornes de test 22 ainsi que les connexions du circuit de surveillance 18 occupent une surface de silicium importante, ce qui entraîne un accroissement indésirable du coût du circuit. Pour cela, une première version du circuit intégré 10 incluant le circuit de surveillance 18 et les bornes de test 22 est produite en petites quantités pour effectuer la mise au point du programme du microprocesseur 12 ou "programme utilisateur". Après cette mise au point, une version du circuit intégré 10 débarrassée du circuit de surveillance 18 et des bornes de test 22 est commercialisée. Cela implique la réalisation de deux versions du circuit intégré, ce qui demande un travail important et reste relativement coûteux. De plus, la puce finale n'est pas forcément identique à la puce testée.

Pour pallier les inconvénients précédemment mentionnés, on cherche à réaliser un circuit de surveillance 18 qui occupe une surface réduite et nécessite seulement un nombre réduit de bornes de test 22, ce qui diminue le coût de revient du circuit de surveillance. Le circuit de surveillance 18 peut alors être laissé sur le circuit intégré 10 finalement commercialisé.

On cherche donc à diminuer le nombre de signaux fournis par le circuit de surveillance 18. Pour ce faire, on fait réaliser directement au niveau du circuit de surveillance 18 certaines opérations logiques sur les données mesurées au niveau du microprocesseur 12 de façon à transmettre seulement des messages ayant un contenu informationnel important.

Ainsi, la norme IEEE-ISTO-5001 en préparation propose dans sa version de 1999, accessible par exemple sur le site www.ieee-isto.org/Nexus5001, un protocole particulier d'échange de messages entre un circuit de surveillance et un outil d'analyse pour un circuit de surveillance 18 ne nécessitant qu'un nombre réduit de bornes de test 22.

Le circuit de surveillance est prévu pour surveiller le fonctionnement du microprocesseur et pour fournir aux bornes de test des messages prédéterminés correspondant à l'exécution de certaines instructions seulement. D'autres messages correspondent à l'exécution de certaines instructions dans certaines conditions prédéterminées. Les différents types de messages et leur structure sont décrits dans la section 6 de la norme IEEE-ISTO-5001.

Plusieurs messages peuvent être produits dans un intervalle de temps réduit. Selon la norme, chaque nouveau message est stocké dans une case, ou zone de stockage de taille prédéterminée, d'une mémoire tampon de type premier-entré/premier-sorti (FIFO) lorsque les bornes de test ne sont pas disponibles (lorsqu'elles sont utilisées pour transmettre un autre message produit précédemment), puis le message est envoyé à l'outil d'analyse, et la case de la mémoire est libérée, lorsque les bornes de test sont disponibles. La mémoire tampon comprend un nombre n de cases qui dépend de la fréquence à laquelle les messages peuvent être écrits dans la mémoire tampon et bien entendu aussi de la fréquence à laquelle la mémoire tampon est lue, et du nombre de bornes de test utilisées.

Certains microprocesseurs peuvent exécuter en parallèle plusieurs instructions du programme. Par exemple, une instruction de saut peut être exécutée simultanément avec une instruction de lecture et/ou d'écriture dans la mémoire 14. Dans un tel cas, deux ou trois messages sont produits en même temps. Pour stocker plusieurs messages produits en même temps, une solution consiste à stocker ces messages en même temps dans une même case de la mémoire tampon. Cela oblige à accroître la capacité de mémorisation de chaque case et donc à augmenter la taille de la mémoire tampon. Ce problème est d'autant plus important que le microprocesseur est susceptible d'exécuter un grand nombre d'instructions en même temps. En outre, selon la norme, une exécution d'une même instruction peut générer des messages de types différents.

Un objet de la présente invention est de prévoir un circuit de surveillance conforme à la norme IEEE-ISTO-5001 qui permet de surveiller un microprocesseur, susceptible de produire un grand nombre de messages en même temps, et dont la mémoire tampon soit de taille réduite.

Un autre objet de la présente invention est de prévoir un procédé optimisé de stockage en mémoire tampon de messages conforme à la norme IEEE-ISTO-5001.

Pour cela, la présente invention prévoit, lorsque plusieurs types de messages sont susceptibles d'être produits en même temps, de diviser la mémoire tampon en plusieurs blocs, dont chacun est prévu pour ne recevoir que des messages de l'un des types de messages susceptibles d'être produits en même temps, la taille de chaque bloc dépendant de la fréquence à laquelle les messages peuvent y être stockés.

Plus particulièrement, la présente invention prévoit un dispositif de surveillance intégré à la puce d'un microprocesseur exécutant une suite d'instructions, comprenant : un moyen de calcul de messages pour produire des messages numériques de différents types correspondant chacun à l'exécution d'une instruction parmi une pluralité d'instructions prédéterminées, le moyen de calcul étant susceptible de produire plusieurs types de messages en même temps ; une mémoire tampon divisée en plusieurs blocs dont chacun est prévu pour ne stocker que des messages de l'un des types de messages susceptibles d'être produits en même temps, la taille de chaque bloc dépendant de la fréquence maximale à laquelle les messages peuvent y être stockés ; et un moyen pour, chaque fois qu'un ou plusieurs messages sont stockés simultanément dans des blocs de la mémoire tampon, stocker dans un bloc prédéterminé de la mémoire tampon une valeur codée désignant le ou lesdits blocs de la mémoire tampon.

Selon un mode de réalisation de la présente invention, le dispositif comprend en outre un moyen pour lire dans l'ordre de leur stockage les valeurs codées stockées dans ledit bloc prédéterminé de la mémoire tampon, pour lire dans l'ordre de leur stockage les messages stockés dans le ou les blocs de la mémoire tampon désignés par chaque valeur codée, et fournir les messages lus à un outil d'analyse externe.

Selon un mode de réalisation de la présente invention, chaque message est composé d'une ou de plusieurs données, deux messages d'un même type pouvant être composés de données de même type et/ou de types différents, chaque bloc de la mémoire tampon est divisé en sous-blocs dont chacun est prévu pour ne stocker que des données d'un seul type de données des messages stockés dans ledit bloc, chaque sous-bloc étant dimensionné pour stocker un nombre de données prédéterminé dépendant de la fréquence à laquelle les données y sont stockées, et ladite valeur codée désigne en outre dans quels sous-blocs du ou des blocs de la mémoire tampon des données ont été stockées.

Selon un mode de réalisation de la présente invention, le dispositif comprend en outre un moyen pour lire dans l'ordre de leur stockage les valeurs codées stockées dans ledit bloc prédéterminé de la mémoire tampon, pour lire dans l'ordre de leur stockage les données stockées dans le ou les sous-blocs de la mémoire tampon désignés par chaque valeur codée, pour former des messages à partir des données lues, et pour fournir lesdits messages à un outil d'analyse externe.

Selon un mode de réalisation de la présente invention, le moyen de calcul de messages est prévu pour ne pas écrire un message comportant des données qui doivent être stockées dans un sous-bloc saturé de données, et pour produire un message d'erreur indiquant qu'au moins un message du type dudit message a été perdu.

La présente invention vise également un procédé de surveillance d'un microprocesseur exécutant une suite d'instructions, comprenant les étapes suivantes :
a/ produire un ou plusieurs messages numériques correspondant respectivement à l'exécution d'une ou de plusieurs instructions parmi une pluralité d'instructions prédéterminées, plusieurs messages pouvant être produits en même temps ;
b/ stocker chacun des messages produits à l'étape a/ dans un bloc prédéterminé de la mémoire tampon, les messages produits simultanément à l'étape a/ étant stockés dans des blocs distincts, et stocker en même temps une valeur codée indiquant dans quels blocs les messages ont été stockés ;
c/ récupérer la valeur codée écrite lors de l'étape b/, et à partir de ladite valeur codée, récupérer les messages stockés lors de l'étape b/.
   Selon un mode de réalisation de la présente invention, le procédé de surveillance comporte l'étape :
d/ si un message produit lors de l'étape a/ doit être stocké lors de l'étape b/ dans un bloc de la mémoire tampon qui est saturé, produire et stocker un message d'erreur spécifique indiquant qu'au moins un message du type dudit message a été perdu.

Selon un mode de réalisation de la présente invention, chaque message est composé d'une ou plusieurs données, deux messages pouvant être composés de données de même type et/ou de données de types différents, et lors de l'étape b/ chacune des données composant les messages produits à l'étape a/ est stockée dans un sous-bloc de la mémoire tampon prévu pour ne stocker qu'un seul type de données, la valeur codée indiquant dans quels sous-blocs les données ont été stockées ; et
l'étape c/ consiste à récupérer la valeur codée écrite lors de l'étape b/, et à partir de ladite valeur codée, à récupérer les données de messages stockées lors de l'étape b/ et reconstituer le ou les messages produits lors de l'étape a/.

Selon un mode de réalisation de la présente invention, le procédé de surveillance comporte l'étape :
d/ si un message produit lors de l'étape a/ comporte des données devant être stockées lors de l'étape b/ dans un sous-bloc de la mémoire tampon qui est saturé, produire et stocker un message d'erreur spécifique indiquant qu'au moins un message du type dudit message a été perdu.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente de manière schématique un circuit intégré muni d'un dispositif de surveillance ;
la figure 2 représente de manière schématique un circuit intégré muni d'un dispositif de surveillance selon la présente invention ; et
les figures 3A, 3B et 3C illustrent des étapes d'écriture dans une mémoire tampon d'un dispositif selon la présente invention.

De mêmes références désignent de mêmes éléments aux différentes figures. Seuls les éléments nécessaires à la compréhension de la présente invention ont été représentés.

La figure 2 représente de façon schématique un circuit intégré comportant comme en figure 1 un microprocesseur 12 relié à une mémoire interne 14, à des bornes d'entrée/sortie 16, et à un circuit de surveillance 18'. Le circuit 18' comporte un circuit de calcul 26 recevant des informations sur les instructions exécutées par le microprocesseur, identifiant le type d'instructions concerné et calculant des messages prévus par la norme. Le circuit de calcul 26 est relié à une mémoire tampon 28 selon l'invention, elle-même reliée à l'outil d'analyse 24 par l'intermédiaire d'un circuit d'interface 30 et de bornes de test constituant un accès parallèle 32.

Selon l'invention, la mémoire tampon 28 est divisée en plusieurs blocs, cinq dans l'exemple représenté, A, B, C, D et E de stockage de messages et un bloc supplémentaire F. On va décrire ci-après un mode de réalisation de l'invention dans lequel le circuit de calcul 26 est susceptible d'identifier cinq types d'événements susceptibles de se produire simultanément ou séparément et de produire des messages correspondant à chacun de ces événements.

On considère à titre d'exemple que le circuit de calcul 26 peut produire des messages de saut, d'écriture et de lecture lorsque le microprocesseur 12 exécute des instructions correspondantes, un message de synchronisation lorsque le circuit de calcul a produit un nombre prédéterminé de messages de saut, et un message de service lorsque le microprocesseur atteint une condition prédéterminée choisie par l'utilisateur. On suppose par la suite que un ou plusieurs de ces messages peuvent survenir simultanément.

Lorsque le circuit de calcul 26 produit un message de saut, il le stocke dans la première case libre du bloc A de la mémoire tampon. Le bloc A comporte un nombre de cases qui dépend de la fréquence à laquelle le circuit de calcul 26 est susceptible d'écrire des messages de saut. Le nombre de cases du bloc A est réduit par rapport au nombre n de cases d'une mémoire tampon classique, car une mémoire classique est prévue pour stocker tous les messages susceptibles d'être produits par le circuit de calcul 26, et non seulement les messages de saut qui ne représentent qu'une fraction des messages produits par le circuit de calcul 26. Les cases du bloc A de la mémoire tampon ont chacune seulement la taille nécessaire pour stocker un message de saut. Le nombre de cases du bloc A peut être évalué en fonction du nombre moyen de messages de saut produits par le circuit de calcul 26 lors de l'exécution de divers programmes par le microprocesseur.

Un message d'écriture, de lecture, de synchronisation ou de service produit par le circuit de calcul 26 est respectivement stocké dans la première case libre du bloc B, C, D ou E. Lorsque plusieurs messages sont produits en même temps, chacun d'eux est stocké dans la première case libre du bloc A à E de la mémoire tampon qui leur est réservé. Comme le bloc A, chacun des blocs B, C, D et E de la mémoire tampon comporte un nombre de cases réduit dépendant de la fréquence d'écriture des messages dans les blocs respectifs. De même, les cases des blocs B, C, D et E ont chacune seulement les tailles nécessaires pour stocker des messages respectivement d'écriture, de lecture, de synchronisation et de service. Les nombres de cases des blocs B à E peuvent être évalués de la même manière que le nombre de cases du bloc A.

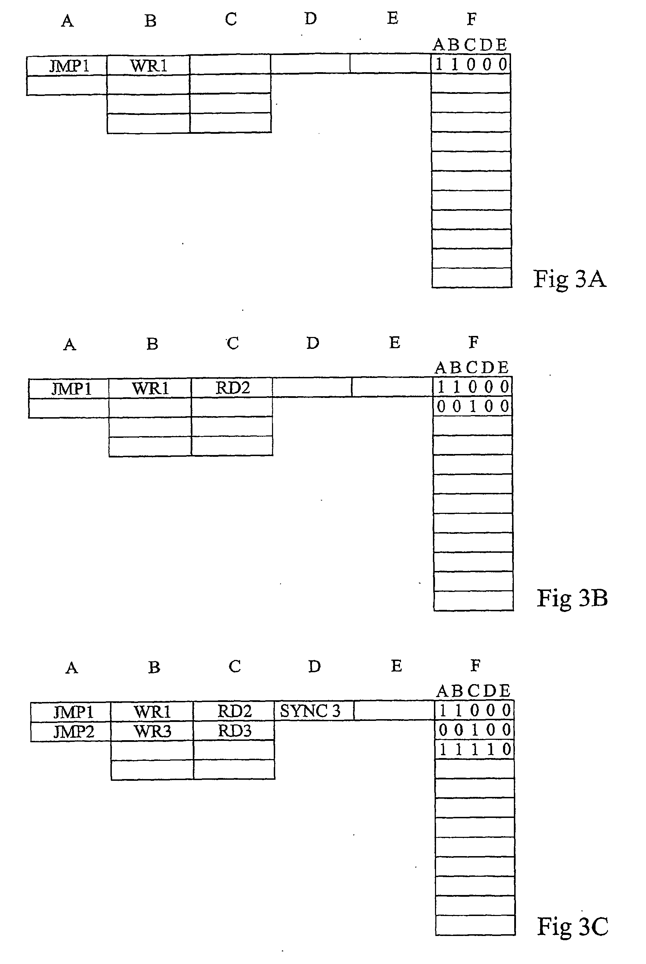

Selon la présente invention, chaque fois que le circuit de calcul 26 stocke un message unique dans un bloc de la mémoire tampon ou plusieurs messages en même temps dans des blocs de la mémoire tampon, le circuit de calcul 26 produit une valeur codée désignant ledit ou lesdits blocs de la mémoire tampon. La valeur codée est stockée dans le bloc supplémentaire F de la mémoire tampon en même temps que le ou les messages sont stockés dans les blocs A à E. Selon un mode de réalisation de l'invention, illustré par la suite aux figures 3A à 3C, la valeur codée peut comprendre plusieurs bits désignant chacun un bloc de stockage de la mémoire tampon. Le bloc F comporte un nombre de cases que l'homme du métier déterminera par exemple par simulation. En pratique, ce nombre est sensiblement égal au nombre de cases d'une mémoire tampon classique.

Le circuit d'interface 30 est prévu pour lire la valeur codée stockée dans la première case occupée du bloc F, puis pour lire les messages stockés dans les premières cases occupées du ou des blocs A à E désignés par ladite valeur codée et pour envoyer lesdits messages à l'outil d'analyse 24.

La surface occupée par la mémoire 28 et l'interface 30 selon l'invention est très inférieure à la surface d'une mémoire tampon classique qui devrait, pour remplir les mêmes fonctions que la mémoire 28, comprendre n cases dont chacune serait apte à stocker à la fois un message de saut, un message d'écriture, un message de lecture, un message de synchronisation et un message de service. Cela constitue un premier avantage de la présente invention.

Les figures 3A à 3C illustrent des étapes d'écriture dans la mémoire tampon de la figure 2. A titre d'illustration, le bloc A comporte deux cases, les blocs B et C quatre cases chacun, et les blocs D et E une case chacun. Le bloc F comporte douze cases. Chaque case du bloc F comporte cinq bits correspondant chacun à l'un des blocs A à E. On considère que la mémoire 28 est initialement vide et qu'aucune lecture de la mémoire tampon n'a lieu en même temps que les étapes illustrées.

La figure 3A représente la mémoire 28 après l'exécution à un premier instant d'une instruction d'écriture et d'une instruction de saut par le microprocesseur 12. Le circuit de calcul 26 a respectivement stocké un message de saut JMP1 et un message d'écriture WR1 dans les premières cases disponibles des blocs A et B. La valeur codée stockée dans la première case disponible du bloc F a une valeur 11000 pour indiquer qu'un message a été stocké dans chacun des blocs A et B et aucun message dans les blocs C, D et E.

La figure 3B représente la mémoire 28 après l'exécution à un deuxième instant d'une instruction de lecture par le microprocesseur 12. Le circuit de calcul 26 a stocké un message de lecture RD2 dans la première case disponible du bloc C. La valeur codée stockée dans la première case disponible du bloc F a une valeur 00100 pour indiquer qu'un message a été stocké dans le bloc C uniquement.

La figure 3C représente la mémoire 28 après l'exécution simultanée à un troisième instant d'une instruction de saut, d'une instruction d'écriture et d'une instruction de lecture par le microprocesseur 12, et la production simultanée d'un message de synchronisation par le circuit de calcul 26. Le circuit de calcul 26 a stocké simultanément un message de saut JMP3 dans la première case disponible du bloc A, un message d'écriture WR3 dans la première case disponible du bloc B, un message de lecture RD3 dans la première case disponible du bloc C, et un message de synchronisation SYNC3 dans la première case disponible du bloc D. Une valeur codée 11110 correspondante a été inscrite dans la première case disponible du bloc F.

A titre d'illustration, en figure 3C, toutes les cases du bloc A stockent un message. Si lors d'un quatrième instant non représenté, avant qu'une lecture de la mémoire 28 ne libère au moins une case du bloc A, le microprocesseur 12 devait exécuter une instruction de saut, le circuit de calcul 26 ne pourrait pas stocker dans le bloc A un message de saut correspondant. Le circuit de calcul 26 est prévu pour produire un message d'erreur indiquant qu'au moins un message de saut n'a pas pu être stocké et a été perdu. Le circuit de calcul 26 est prévu pour produire des messages d'erreur semblables pour les blocs B à E. Si des messages destinés à être stockés dans plusieurs blocs sont perdus, un message d'erreur correspondant est produit. L'homme du métier notera que, même si un bloc de la mémoire tampon est saturé, les autres blocs peuvent encore être utilisés, ce qui constitue un avantage supplémentaire de la présente invention. Selon un mode de réalisation de la présente invention, le message d'erreur produit par le moyen 26, lorsqu'il en existe un, n'est transmis que quand l'outil d'analyse 24 a lu un nombre de cases du bloc considéré égal au nombre total de cases de ce bloc.

La présente invention a été décrite en relation avec une division particulière de la mémoire tampon dans le cas où tous les types de messages produits par le circuit de calcul sont susceptibles d'être produits en même temps. L'homme du métier adaptera sans difficulté la présente invention au cas où chaque bloc de la mémoire tampon peut recevoir divers types de messages non susceptibles d'être produits en même temps.

En outre, si l'on considère que chaque message stocké dans un bloc de la mémoire tampon est composé d'une ou de plusieurs données de types distincts, chaque bloc de la mémoire peut être divisé en sous-blocs dont chacun est prévu pour ne stocker qu'un seul type de données. Les valeurs codées stockées dans le bloc F comprendront alors autant de bits que la mémoire tampon comprend de sous-blocs.

A titre d'exemple, un message de saut peut être un message dit de saut direct et ne contenir qu'une donnée d'un seul type (I-CNT dans la norme considérée), ou un message dit de saut indirect et contenir une donnée de type I-CNT et une donnée de type adresse (ADDR). Le bloc A peut alors être divisé en un sous-bloc A' destiné à ne stocker que les données de type I-CNT, et un sous-bloc A" destiné à ne stocker que les adresses ADDR. Les cases des sous-blocs A' et A" sont prévues chacune pour ne stocker respectivement qu'une donnée I-CNT ou une adresse ADDR. Le sous-bloc A' comportera autant de cases que le bloc A non divisé décrit en relation avec les figures précédentes. Le sous-bloc A", qui n'est destiné qu'à stocker des données propres aux messages de saut indirect, comportera un nombre de cases inférieur à celui du sous-bloc A'. Un bloc A divisé en deux sous-blocs A' et A" occupe ainsi une surface inférieure à celle d'un bloc A non divisé tel que décrit en relation avec les figures précédentes, et constitue un mode de réalisation préféré de l'invention.

Bien entendu, au moment de la lecture de la mémoire tampon les données stockées dans les sous-blocs sont ré-assemblées.

De plus, le circuit de calcul 26 est de préférence prévu pour produire des messages d'erreur distincts selon que l'un ou l'autre des sous-blocs d'un bloc de la mémoire tampon est saturé, et les sous-blocs non saturés peuvent encore être utilisés pour stocker les données des messages qui leur sont propres, ce qui constitue un avantage supplémentaire de la présente invention.

La présente invention a été décrite en relation avec un circuit de calcul 26 susceptible de produire simultanément cinq types de messages, mais l'homme du métier adaptera sans difficulté la présente invention à un circuit de calcul susceptible de produire un plus grand nombre de messages en même temps.

En outre, l'homme du métier adaptera sans difficulté la présente invention à un microprocesseur susceptible d'exécuter en même temps deux instructions de même type telles que deux instructions de lecture. Il prévoira pour cela un bloc de la mémoire tampon pour le message correspondant à chaque instruction.

La présente invention a été décrite en relation avec des mémoires tampon de type premier-entré/premier-sorti, mais s'adaptera sans difficulté à d'autres structures de mémoire tampon.

La présente invention a été décrite en relation avec un codage particulier de la valeur codée stockée dans le bloc F de la mémoire tampon, mais s'adaptera sans difficulté à d'autres codages de la valeur codée.

Les divers constituants du dispositif de surveillance selon la présente invention ont été décrits comme des éléments matériels, mais l'homme du métier notera qu'ils peuvent comporter également des éléments logiciels, ou se composer uniquement d'éléments logiciels.

## Revendications

1. Dispositif de surveillance (1θ' intégré à la puce d'un microprocesseur (12), le microprocesseur exécutant une suite d'instructions, le dispositf comprenant :
un moyen de calcul de messages (26) pour produire des messages numériques de différents types correspondant chacun à l'exécution d'une instruction parmi une pluralité d'instructions prédéterminées, le moyen de calcul (26) étant susceptible de produire plusieurs types de messages en même temps ;
une mémoire tampon (28) divisée en plusieurs blocs (A, B, C, D, E), dont chacun est prévu pour ne stocker que des messages de l'un des types de messages susceptibles d'être produits en même temps, la taille de chaque bloc dépendant de la fréquence maximale à laquelle les messages peuvent y être stockés
un moyen (26) pour, chaque fois qu'un message est stocké ou que plusieurs messages sont stockés simultanément dans des blocs (A, B, C, D, E) de la mémoire tampon (28), stocker dans un bloc prédéterminé (F) de la mémoire tampon une valeur codée désignant le ou lesdits blocs de la mémoire tampon.

2. Dispositif selon la revendication 1, comprenant en outre un moyen (30) pour lire dans l'ordre de leur stockage les valeurs codées stockées dans ledit bloc prédéterminé (F) de la mémoire tampon (28), pour lire dans l'ordre de leur stockage les messages stockés dans le ou les blocs de la mémoire tampon (A, B, C, D, E) désignés par chaque valeur codée, et fournir les messages lus à un outil d'analyse externe (24).

3. Dispositif de surveillance selon la revendication 1, dans lequel chaque message est composé d'une ou de plusieurs données (I-CNT, ADDR), deux messages d'un même type pouvant être composés de données de même type ou de types différents, et dans lequel :
chaque bloc (A, B, C, D, E) de la mémoire tampon est divisé en sous-blocs (A', A") dont chacun est prévu pour ne stocker que des données d'un seul type de données des messages stockés dans ledit blocs, chaque sous-bloc étant dimensionné pour stocker un nombre de données prédéterminé dépendant de la fréquence à laquelle les données y sont stockées, et dans lequel
ladite valeur codée désigne en outre dans quels sous-blocs du ou des blocs de la mémoire tampon des données ont été stockées.

4. Dispositif selon la revendication 3, comprenant en outre un moyen (30) pour lire dans l'ordre de leur stockage les valeurs codées stockées dans ledit bloc prédéterminé (F) de la mémoire tampon (28), pour lire dans l'ordre de leur stockage les données stockées dans le ou les sous-blocs de la mémoire tampon (A', A") désignés par chaque valeur coudée, pour former des messages à partir des données lues, et pour fournir lesdits messages à un outil d'analyse externe (24).

5. Dispositif de surveillance selon la revendication 4, dans lequel le moyen de calcul de messages (26) est prévu pour ne pas écrire un message comportant des donnés qui doivent être stockées dans un sous-bloc (A', A") saturé de données, et pour produire un message d'erreur indiquant qu'au moins un message du type dudit message a été perdu.

6. Procédé de surveillance mis en oeuvre par un dispositif de surveillance (18') intégré à la puce d'un microprocesseur (12) exécutant une suite d'instructions, comprenant les étapes suivantes :
a/ produire des messages numériques de différents types correspondant chacun à l'exécution d'une instruction parmi une pluralité d'instructions prédéterminées, plusieurs messages pouvant être produits en même temps ;
b/ stocker chacun des messages produits à l'étape a/ dans un bloc prédéterminé (A, B, C, D, E) de la mémoire tampon (28), chaque bloc étant prévu pour ne stocker que des messages de l'un des types de messages susceptibles d'être produits en même temps, la taille de chaque bloc dépendant de la fréquence maximale à laquelle les messages peuvent y être stockés, les messages produits simultanément à l'étape a/ étant stockés dans.
des blocs distincts, et stocker en même temps une valeur codée indiquant dans quels blocs les messages ont été stockés ;
c/ récupérer la valeur codée écrite lors de l'étape b/, et à partir de ladite valeur codée, récupérer les messages stockés lors de l'étape b/.

7. Procédé de surveillance selon la revendication 6, comportant l'étape :
d/ si un message produit lors de l'étape a/ doit être stocké lors de l'étape b/ dans un bloc de la mémoire tampon qui est saturé, produire et stocker un message d'erreur spécifique indiquant qu'au moins un message du type dudit message a été perdu.

8. Procédé de surveillance selon la revendication 6, dans lequel chaque message est composé d'une ou plusieurs données, deux messages pouvant être composés, de données de même type ou de données de types différents, et dans lequel
lors de l'étape b/ chacune des données composant les messages produits à l'étape a/ est stockée dans un sous-bloc (A', A") de la mémoire tampon (28) prévu pour ne stocker qu'un seul type de données, la valeur codée indiquant dans quels sous-blocs les données ont été stockées ; et
l'étape c/ consiste à récupérer la valeur codée écrite lors de l'étape b/, et à partir de ladite valeur codée, à récupérer les données de messages stockées lors de l'étape b/ et reconstituer le ou les messages produits lors-de l'étape a/.

9. Procédé de surveillance selon la revendication 8, comportant l'étape :
d/ si un message produit lors de l'étape a/ comporte des données devant être stockées lors de l'étape b/ dans un sous-bloc de la mémoire tampon qui est saturé, produire et stocker un message d'erreur spécifique indiquant qu'au moins un message du type dudit message a été perdu.

## Claims

1. A monitoring device (18') integrated to the chip of a microprocessor (12), the microprocessor executing a sequence of instructions, the device comprising:
a message calculation means (26) for generating digital messages of different types each corresponding to the execution of an instruction from among a plurality of predetermined instructions, the calculation means (26) being likely to generate several types of messages at the same time;
a buffer memory (28) divided into several blocks (A, B, C, D, E), each of which is provided to only store messages of one of the types of messages likely to be generated at the same time, the size of each block depending on the maximum frequency at which the messages can be stored therein;
a means (26) for, each time one message is stored or several messages are simultaneously stored in blocks (A, B, C, D, E) of the buffer memory (28), storing in a predetermined block (F) of the buffer memory a coded value designating said blocks of the buffer memory.

2. The device of claim 1, further comprising a means (30) for reading in the order of their storage the coded values stored in said predetermined block (F) of the buffer memory (28), for reading in the order of their storage the messages stored in the block(s) of the buffer memory (A, B, C, D, E) designated by each coded value, and providing the read messages to an external analysis tool (24).

3. The monitoring device of claim 1, in which each message is formed of one or several data (I-CNT, ADDR), two messages of a same type being likely to be formed of data of the same type or of different types, and in which:
each block (A, B, C, D, E) of the buffer memory is divided into sub-blocks (A', A"), each of which is provided to only store data of a single type of data messages stored in said block, each sub-block being sized to store a predetermined number of data depending on the frequency at which the data are stored therein, and in which
said coded value further designates in which sub-blocks of the block(s) of the buffer memory data have been stored.

4. The device of claim 3, further comprising a means (30) for reading in the order of their storage the coded values stored in said predetermined block (F) of the buffer memory (28), for reading in the order of their storage the data stored in the sub-block(s) of the buffer memory (A', A") designated by each coded value, for forming messages from the read data, and for providing said messages to an external analysis tool (24).

5. The monitoring device of claim 4, in which the calculation means (26) is provided not to write a message comprising data which must be stored in a sub-block (A', A") saturated with data, and to generate an error message indicating that at least one message of the type of said message has been lost.

6. A monitoring method implemented by a monitoring device (18) integrated in the chip of a microprocessor (12) executing a sequence of instructions, comprising the steps of:
a/ generating digital messages respectively corresponding to the execution of one instruction from among a plurality of predetermined instructions, several messages possibly being generated at the same time;
b/ storing each message generated at step a/ in a predetermined block (A, B, C, D, E) of the buffer memory (28), each block being provided for storing only messages of one of the types of messages capable of being generated simultaneously, the size of each block being dependent upon the maximum frequency at which the messages can be stored therein, and the messages simultaneously generated at step a/ being stored in separate blocks, and storing at the same time a coded value indicating in which blocks the messages have been stored;
c/ recovering the coded value written at step b/, and based on said coded value, recovering the messages stored at step b/.

7. The monitoring method of claim 6, comprising the step of:
d/ if a message generated at step a/ must be stored at step b/ in a block of the buffer memory which is saturated, generating and storing a specific error message indicating that at least one message of the type of said message has been lost.

8. The monitoring method of claim 6, in which each message is formed of one or several data, where two messages can be formed of data of the same type or of data of different types, and in which
at step b/ each of the data forming the messages generated at step a/ is stored in a sub-block (A', A") of the buffer memory (28) provided to only store a single type of data, the coded value indicating in which sub-blocks the data have been stored; and
step c/ consists of recovering the coded value written at step b/, and based on said coded value, recovering the data of messages stored at step b/ and restoring the message(s) generated at step a/.

9. The monitoring method of claim 8, comprising the step of:
d/ if a message generated at step a/ comprises data to be stored at step b/ in a sub-block of the buffer memory which is saturated, generating and storing a specific message error indicating that at least one message of said message has been lost.

## Patentansprüche

1. Überwachungsvorrichtung (18'), die auf dem Chip eines Mikroprozessors (12) integriert ist, wobei der Mikroprozessor eine Abfolge von Anweisungen ausführt, wobei die Vorrichtung Folgendes aufweist:
Nachrichtenberechnungsmittel (26) zur Erzeugung von digitalen Nachrichten von unterschiedlichen Arten, die jeweils der Ausführung einer Anweisung unter einer Vielzahl von vorbestimmten Anweisungen entsprechen, wobei die Berechnungsmittel (26) wahrscheinlich unterschiedliche Arten von Nachrichten gleichzeitig erzeugen;
einen Pufferspeicher (28), der in verschiedene Blöcke (A, B, C, D, E) aufgeteilt ist, wobei jeder davon vorgesehen ist, um nur Nachrichten von einer der Arten von Nachrichten zu speichern, die wahrscheinlich gleichzeitig erzeugt werden, wobei die Größe von jedem Block von der maximalen Frequenz abhängt, mit der die Nachrichten darin gespeichert werden können;
Mittel (26) zum Speichern eines kodierten Wertes in einem vorbestimmten Block (F) des Pufferspeichers jedes mal dann, wenn eine Nachricht gespeichert wird oder mehrere Nachrichten gleichzeitig in den Blöcken (A, B, C, D, E) des Pufferspeichers (28) gespeichert werden, wobei der kodierte Wert die Blöcke des Pufferspeichers bezeichnet.

2. Vorrichtung nach Anspruch 1, die weiter Mittel (30) aufweist, um die in dem vorbestimmten Block (F) des Pufferspeichers (28) gespeicherten Werte in der Reihenfolge ihrer Speicherung auszulesen, und zwar zur Auslesung der in dem Block (den Blöcken) des Pufferspeichers (A, B, C, D, E) gespeicherten Nachrichten in der Reihenfolge ihrer Speicherung, die durch jeden kodierten Wert bezeichnet wird, und zum Liefern der gelesenen Nachrichten an ein externes Analysewerkzeug (24).

3. Überwachungsvorrichtung nach Anspruch 1, bei der jede Nachricht aus einer oder mehreren Daten (I-CNT, ADDR) gebildet wird, wobei zwei Nachrichten einer gleichen Art wahrscheinlich aus Daten der gleichen Art oder unterschiedlicher Art gebildet werden, und wobei
jeder Block (A, B, C, D, E) des Pufferspeichers in Unterblöcke (A', A") aufgeteilt ist, wobei jeder davon vorgesehen ist, um nur Daten einer einzigen Art von Datennachrichten zu speichern, die in dem Block gespeichert sind, wobei jeder Unterblock bemessen ist, um eine vorbestimmte Anzahl von Daten abhängig von der Frequenz zu speichern, mit der die Daten darin gespeichert werden, und wobei
der kodierte Wert weiter bezeichnet, in welchem Unterblock des Blockes (der Blöcke) des Pufferspeichers Daten gespeichert worden sind.

4. Vorrichtung nach Anspruch 3, die weiter Mittel (30) zum Lesen der in dem vorbestimmten Block (F) des Pufferspeichers (28) gespeicherten kodierten Werte in der Reihenfolge ihrer Speicherung zum Auslesen der Daten, die in dem Unterblock (den Unterblöcken) des Pufferspeichers (A', A") gespeichert sind, in der Reihenfolge ihrer Speicherung, die von jedem kodierten Wert bezeichnet wird, um Nachrichten aus den gelesenen Daten zu bilden, und um die Nachrichten zu einem externen Analysewerkzeug (24) zu liefern.

5. Überwachungsvorrichtung nach Anspruch 4, wobei die Berechnungsmittel (26) vorgesehen sind, um nicht eine Daten aufweisende Nachricht zu schreiben, die in einem Unterblock (A', A") gespeichert werden muß, der mit Daten gesättigt bzw. gefüllt ist, und um eine Fehlernachricht zu erzeugen, die anzeigt, dass mindestens eine Nachricht der Art von Nachrichten verloren gegangen ist.

6. Überwachungsverfahren, welches durch eine Überwachungsvorrichtung (18) eingerichtet wird, die in dem Chip eines Mikroprozessors (12) integriert ist, der eine Abfolge von Anweisungen ausführt, welche folgende Schritte aufweist:
a/ Erzeugen von digitalen Nachrichten, die jeweils der Ausführung von einer Anweisung unter einer Vielzahl von vorbestimmten Anweisungen entsprechen, wobei mehrere Nachrichten möglicherweise zur gleichen Zeit erzeugt werden;
b/ Speichern jeder im Schritt a/ erzeugten Nachricht in einem vorbestimmten Block (A, B, C, D, E) des Pufferspeichers (28), wobei jeder Block vorgesehen ist, um nur Nachrichten von einer Art von Nachrichten zu speichern, die gleichzeitig erzeugt werden können, wobei die Größe von jedem Block von der maximalen Frequenz abhängt, mit der die Nachrichten darin gespeichert werden können, und wobei die gleichzeitig im Schritt a/ erzeugten Nachrichten in getrennten Blöcken gespeichert werden, und wobei gleichzeitig ein kodierter Wert gespeichert wird, der anzeigt, in welchen Blöcken die Nachrichten gespeichert worden sind;
c/ Aufrufen des im Schritt b/ geschriebenen kodierten Wertes und Aufrufen der im Schritt b/ gespeicherten Nachrichten basierend auf dem kodierten Wert.

7. Überwachungsverfahren nach Anspruch 6, welches folgende Schritte aufweist:
d/ wenn eine im Schritt a/ erzeugte Nachricht im Schritt b/ in einem Block des Pufferspeichers gespeichert werden muss, der gesättigt bzw. gefüllt ist, Erzeugen und Speichern einer spezifischen Fehlernachricht, die anzeigt, dass zumindest eine Nachricht der Art von Nachrichten verloren gegangen ist.

8. Überwachungsverfahren nach Anspruch 6, wobei jede Nachricht aus einem Datum oder einer Vielzahl von Daten gebildet wird, wobei zwei Nachrichten aus Daten der gleichen Art oder aus Daten von unterschiedlicher Art gebildet werden können, und wobei
im Schritt b/ jede der Daten, die die im Schritt a/ erzeugten Nachrichten bilden, in einem Unterblock (A', A") des Pufferspeichers (28) gespeichert werden, der vorgesehen ist, um nur eine einzige Art von Daten zu speichern, wobei der kodierte Wert anzeigt, in welchen Unterblöcken die Daten gespeichert worden sind; und
wobei der Schritt c/ daraus besteht, den im Schritt b/ geschriebenen kodierten Wert aufzurufen und basierend auf dem kodierten Wert die Daten der im Schritt b/ gespeicherten Nachrichten aufzurufen und die Nachricht (die Nachrichten) wieder herzustellen, die im Schritt a/ erzeugt wurden.

9. Überwachungsverfahren nach Anspruch 8, welches folgenden Schritt aufweist:
d/ wenn eine im Schritt a/ erzeugte Nachricht Daten aufweist, die im Schritt b/ in einem Unterblock des Pufferspeichers gespeichert werden sollen, der gesättigt bzw. gefüllt ist, Erzeugen und Speichern einer spezifischen Fehlernachricht, die anzeigt, dass zumindest eine Nachricht der erwähnten Art von Nachrichten verloren gegangen ist.
